# EUROPEAN PATENT APPLICATION

(11) **EP 1 748 448 A1**
(43) Date of publication of application: **31.01.2007**
(21) Application number: 06118140.0
(22) Date of filing: 28.07.2006
(51) Int. Cl.: G21D 5/02, G21D 7/04

(54) **Space propulsion nuclear device**

(30) Priority: 29.07.2005 IT MI20051495
(71) Applicant: Ansaldo Nucleare S.p.A., 16152 Genova (IT)
(72) Inventor: Cinotti, Luciano, 16036 Recco (IT); Negrini, Alberto, 20149 Milano (IT)
(74) Representative: Jorio, Paolo

(57) **Abstract**

A space propulsion nuclear device (1) includes a nuclear-reactor core (3) for the emission of electromagnetic radiation, and a sail (5), fixedly connected to the core (3) for reflecting the electromagnetic radiation emitted by the core (3) and generating a propulsive thrust. The core (3) has a block (8) made of neutron-moderating material and a plurality of nuclear-fuel elements (9) uniformly distributed in the block (8) in the solid angle 4π; each element (9) is associated to an independent heat-exchange pipe (30), which extends from the inside of the block (8) to the outside of the block (8) and contains a substance designed to ensure a cycle of evaporation and condensation in natural circulation between the inside and the outside of the block (8).

## Description

The present invention relates to a space propulsion nuclear device, particularly indicated for space vehicles designed for exploring deep space in missions of long duration.

In the exploration of deep space it is essential to have available a propulsion system that is as light as possible, guaranteeing at the same time a thrust of intensity and duration commensurate with the targets set, and that is provided with a system for electric-power generation that is simple and reliable.

Amongst the systems of propulsion so far proposed, the use of chemical propellants is not particularly indicated for these applications, taking into account the very high masses involved.

So-called "solar sail" propulsion systems have also been developed, which exploit the propulsive force resulting from the solar pressure (mainly of a photonic nature) exerted on a "sail" of adequate surface and material. Said systems satisfy only in part the requirements previously highlighted. In fact, the exploitation of "solar wind" has a limit, which renders it far from interesting for the exploration of deep space and consists in the fact that the solar electromagnetic radiation decreases inversely with the square of the distance from the sun. Consequently, as we move away from the sun the energy available for propulsion decreases drastically.

To overcome this drawback, a propulsion system for space vehicles has been proposed, which envisages mechanical coupling of a source of electromagnetic radiation of a nuclear type ("artificial sun") to a reflector of electromagnetic radiation ("sail"). In this case the "sail" and the "artificial sun" will come to be always at the same distance from one another, consequently guaranteeing application to the space vehicle of a constant propulsive force, irrespective of the distance from the sun.

At the moment, however, an "artificial sun", i.e., a source of nuclear energy, suitable for the purpose indicated is not available. The solutions so far proposed do not seem in fact satisfactory in terms of weights and overall dimensions, efficiency, simplicity and reliability of construction and use and, in particular, as regards an effective dissipation of the heat generated by the nuclear reaction.

Consequently, one aim of the present invention is to provide a nuclear device for space propulsion that will overcome the drawbacks that have emerged in known solutions.

In particular, one aim of the invention is to provide an effective and reliable device, which is at the same time relatively uncomplex and is fully suited for equipping space vehicles designed for exploration of deep space in missions of long duration.

In accordance with said aims, the present invention relates to a nuclear device for space propulsion, as defined in the annexed Claim 1.

The invention is described by way of example in the following non-limiting embodiments, with reference to the figures of the accompanying drawings, in which:
- Figure 1 is a schematic view of a space propulsion nuclear device in accordance with the invention;
- Figure 2 illustrates a detail at an enlarged scale of the device of Figure 1;
- Figure 3 is a cross-sectional view of a component of the device of Figure 1;
- Figure 4 is a schematic partial perspective view of the device of Figure 1 in a different operating position;
- Figure 5 is a schematic illustration of a variant of the device of Figure 1; and
- Figure 6 is a view at an enlarged scale of a detail of the device of Figure 4.

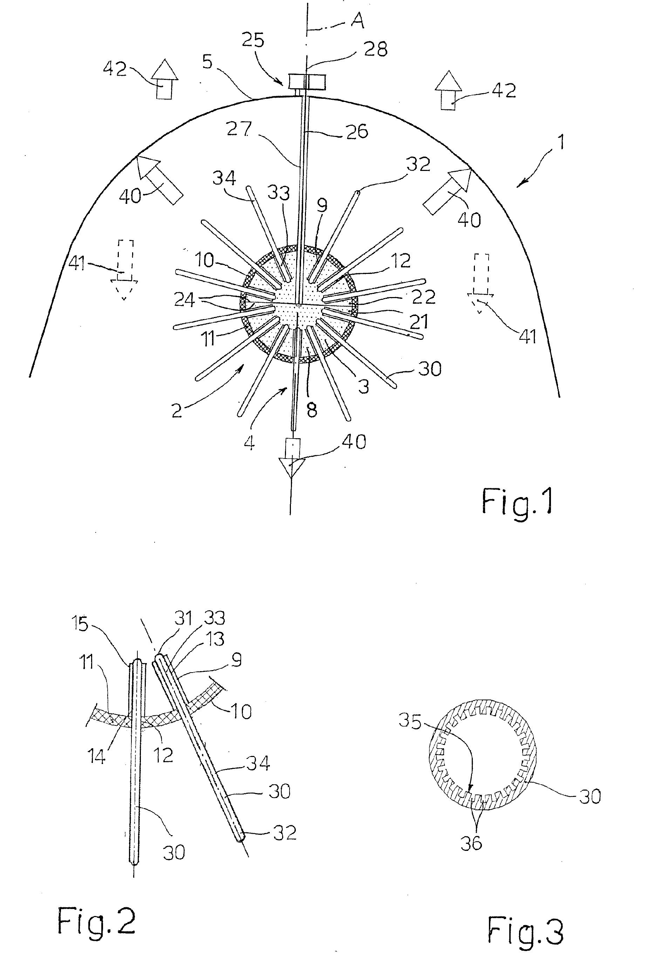

With reference to Figure 1, a nuclear device 1 for space propulsion comprises a nuclear reactor 2, in the case in point a fission reactor, having a core 3 for the emission of electromagnetic radiation associated to a heat-exchange system 4 for dissipating the heat generated by the core 3, and a panel or "sail" 5 for reflecting the electromagnetic radiation, which is fixedly connected to the nuclear reactor 2 and in particular to the core 3 for reflecting the electromagnetic radiation emitted by the core 3 (and in particular the photonic component) and generating a propulsive thrust. The sail 5 is as a whole concave and cup-shaped and is set around the core 3.

The core 3 is shaped so as to present a substantially isotropic emission of electromagnetic radiation in space and comprises a block 8 made of neutron-moderating material, for example graphite or other suitable material designed to slow down the neutrons, and a plurality of nuclear-fuel elements 9 arranged in the block 8 and made of a suitable fissile material.

The block 8 has a compact shape, i.e., it extends in a substantially uniform way in the three dimensions, and the elements 9 are uniformly distributed in the block 8 and have a substantially regular three-dimensional spatial disposition in the block 8. In the example illustrated, the block 8 is substantially spherical in shape, but it remains understood that it could present a different shape, for example polyhedral, cylindrical, prismatic, etc. The block 8 is coated by a coating layer 10 made of neutron-reflecting material, for example beryllium oxide or some other suitable neutron-reflecting material, which constitutes a wall 11 for containment of the block 8.

With reference also to Figure 2, the elements 9 extend radially from the wall 11 towards the inside of the block 8 and are housed in respective seats 12, formed so that they pass through the wall 11 and distributed uniformly on the wall 11 in the solid angle 4n. The elements 9 are hollow, being, for example, constituted by respective tubular bodies open at their ends, in the case in point substantially cylindrical bodies. The elements 9 hence extend along respective axes and are provided with respective internal elongated cavities 13. The elements 9 are fixed in the seats 12 via respective root ends 14 and extend inside the block 8 with respective free ends 15.

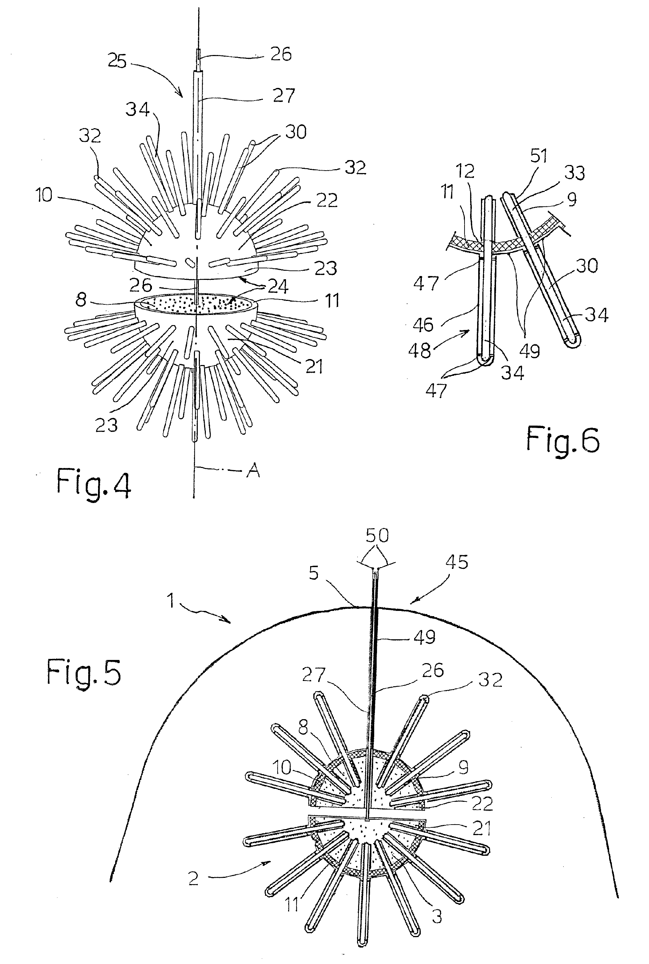

With reference also to Figure 4, the block 8 is divided into two sectors 21, 22, which are symmetrical along a median plane. The sectors 21, 22 face each other and are mobile with respect to each other along an axis A and are delimited by respective surfaces 23, individually provided with respective portions of the coating layer 10, and by respective joining surfaces 24, which are without any coating and face and mate with each other.

The device 1 also comprises a movement system 25 for varying the distance between the sectors 21, 22 and consequently the effective neutron multiplication factor (Keff) of the core 3.

In the non-limiting example illustrated in Figures 1 and 4, the movement system 25 comprises an adjustment rod 26, set fixedly to the sector 21 and housed so that it can slide in a tubular guide 27 formed through the sector 22 along the axis A and constrained to the sail 5, and an actuator 28 of any known type (only schematically represented in Figure 1) for moving the rod 26 in the guide 27 and thus translate the sector 21 with respect to the sector 22 along the axis A.

The heat-exchange system 4 comprises a plurality of heat-exchange tubes 30 associated to the nuclear-fuel elements 9; the tubes 30 extend from the inside of the block 8 to the outside of the block 8 and contain a cooling substance, designed to ensure a cycle of evaporation and condensation in natural circulation between the inside and the outside of the block 8, for example for example lithium highly enriched in the isotope Li-7.

Each element 9 is associated to an independent tube 30; i.e., the tubes 30 are independent of one another and the cooling substance contained in each tube 30 circulates only inside said tube 30 (consequently, no circuit for circulation of the cooling substance from one tube 30 to another is present).

As illustrated in detail in Figure 2, each tube 30 is housed inside the cavity 13 of an element 9 and is set passing through the wall 11 of the block 8, presenting a first longitudinal end 31 in the proximity of the free end 15 of the respective element 9, and a second longitudinal end 32 that extends on the outside of the block 8 beyond the wall 11. Each tube 30 then has a portion 33 inserted inside the element 9 and a portion 34 external to the block 8. The ends 31, 32 of the tubes 30 are closed.

As illustrated in detail in Figure 3, the tubes 30 have internal lateral surfaces 35 provided with respective pluralities of uniformly distributed longitudinal capillary grooves 36.

Operation of the device 1 is described in what follows.

In the core 3 there occurs a nuclear reaction that produces heat and consequently electromagnetic radiation. The electromagnetic radiation of thermal origin, generated by the core 3, schematically represented by the arrows 40 in Figure 1, has a prevalently isotropic distribution. The portion of electromagnetic radiation emitted by the core 3 and intercepted by the sail 5 is reflected by the sail 5 in a direction parallel to a pre-set direction, as represented by the arrows 41 in Figure 1 and hence oriented in a preferential direction, thus determining a propulsive force in the opposite direction, represented by the arrows 42 in Figure 1.

Control of the nuclear reaction in the core 3 is obtained, very simply, by bringing the sectors 21, 22 closer to one another or moving them away from one another by acting on the rod 26 via the actuator 28. The core 3 is sized in such a way as to be critical when the sectors 21, 22 are moved up to one another to a pre-set distance from one another, and subcritical when the sectors 21, 22 are moved away from one another to an appropriate distance. Obviously, the distance between the sectors 21, 22 that renders neutronically critical the core 3 will tend to decrease as the reactivity of the core 3 itself decreases, i.e., as the fuel is exhausted, until it goes to zero when the fuel has reached the maximum burning possible, compatibly with the resistance of the materials to thermomechanical stresses.

The heat generated by the nuclear reaction is dissipated by the core 3 via the heat-exchange system 4, operation of which is particularly simple and effective. The cooling substance contained in the tubes 30 and in particular in the portions 33 within the block 8 is heated by the heat generated by the nuclear reaction and evaporates, diffusing inside the tubes 30 towards the ends 32 and then condensing on the internal lateral surfaces 35, which are cooler than the external portions 34. Thanks to the presence of the longitudinal capillary grooves 36, the condensate is recalled towards the hot ends 31 of the tubes 30, where it is again heated, evaporates and is again diffused, thus guaranteeing setting-up of a thermal cycle of evaporation and condensation in natural circulation between the inside and the outside of the block 8. The heat produced by the core 3 is then distributed uniformly on the portions 34 of the tubes 30 and irradiated on the outside (irradiation being the only phenomenon of transmission of heat possible in a vacuum). Thanks to the particular regular spatial distribution of the tubes 30 in the solid angle 4n, the effects of thermal self-shielding between the tubes 30 are minimized, a fact that guarantees a more homogeneous distribution of the emissive power on the tubes 30 and hence a smaller thermal stress thereof.

In the variant of Figures 5 and 6, where the items that are similar to or the same as the ones already described are designated by the same reference numbers, the device 1 moreover comprises a system for generation of electric power 45 by thermionic effect, comprising a plurality of shells 46 associated to respective tubes 30. In particular, the shells 46 are individually arranged around the external portions 34 of the tubes 30 on the outside of the block 8. Each shell 46 is set at a distance from the tube 30, to which it is associated via electrical insulators 47.

Each assembly of a tube 30 and of a shell 46 constitutes a thermionic cell 48. The cells 48 are connected together in series via an electric circuit 49 provided with a pair of terminals 50.

In this variant, the portions 33 of the tubes 30 inserted inside the core 3 are electrically insulated, for example via appropriate insulating layers 51, made with a suitable electrically insulating material and/or constituted by regions of vacuum and set between the portions 33 and the neutron-moderating and neutron-reflecting materials constituting the block 8 and the wall 11, respectively.

As an alternative, the neutron-moderating and neutron-reflecting materials used for making the block 8 and the wall 11 can be replaced by an appropriate insulating material (for example a ceramic material), compensating for the loss of reactivity with a larger amount of nuclear fuel.

The generation of electric power in the cells 48 exploits the thermionic effect determined by the difference in temperature between the tubes 30 and the respective shells 46: the tubes 30 are in fact at a temperature higher than the shells 46 and emit electrons that have gathered on the shells 46. The circuit 49 connects in series a number of cells 48 sufficient to obtain the desired difference of potential across the terminals 50.

Of course, according to the characteristics imposed (voltage and current), there can also be provided a grouping in parallel of groups of cells 48 set in series.

From what has been set forth above the advantages of the present invention emerge clearly, above all in terms of simplicity and reliability.

In particular, the device 1 of the invention does not require complex systems for dissipation of heat from the core 3 to outer space, such as circuits with pumps or other systems of circulation. Furthermore, in the event of damage to one or more heat-exchange tubes 30 (for example, following upon impact of micro-meteorites), the cooling of the core 3 is not irremediably jeopardized in so far as the tubes 30 are independent of one another and the loss of single tubes 30 does not jeopardize operation of the others. It will consequently be sufficient, in the sizing stage, to provide tubes 30 in excess so as to render accidental statistical loss of some tubes 30 acceptable.

Also control of the reactivity of the core 3 is very simple and effective, it being achieved by varying the relative distance of the sectors 21, 22 of the block 8.

With an appropriate initial sizing of the device 1 from the neutronic standpoint, the device 1 does not then require subsequent operations of recharging of the nuclear fuel to be carried out, it being possible in any case to generate a thermal power of the order of tens of megawatts and guarantee a thrust for several decades, which is fully adequate for space missions of long duration.

Also the system for generation of electric power 45 is very simple and reliable. Said system is able to function at full power for the entire period of operation of the core 3, and then continue to function at reduced power, exploiting the heat emitted by the products of fission of the core 3.

In addition, the device 1 enables, in the event of the nuclear reactor 2 being extinguished, restarting from cold conditions. In fact, in the event of extinction of the nuclear reactor 2, as the temperature in the core 3 progressively decreases, the cooling substance contained in the tubes 30 cools off and freezes at the ends 32 external to the block 8. With the nuclear reactor 2 off, the cooling substance is hence frozen and collected substantially at the ends 32 of the tubes 30. When the nuclear reactor is started up again, by bringing the sectors 21, 22 up to one another, the tubes 30 heat up starting from the ends 31 and progressively towards the ends 32 as a result of the irradiation of the wall 11, which irradiates heat towards the same tubes 30, restoring circulation of the cooling substance, without requiring any auxiliary circuit for pre-heating the cooling substance.

It then remains understood that further modifications and variations can be made to the device described and illustrated herein, without departing from the scope of the annexed claims.

## Claims

1. A space propulsion nuclear device (1), comprising a nuclear-reactor core (3) for the emission of electromagnetic radiation, having a block (8) made of neutron-moderating material and a plurality of nuclear-fuel elements (9) arranged in the block, and a heat-exchange system (4) for dissipating the heat generated in the core; the device being **characterized in that** the core (3) is shaped so as to present an emission of electromagnetic radiation that is substantially isotropic in space, and the heat-exchange system (4) comprising heat-exchange tubes (30) associated to respective nuclear-fuel elements (9), said tubes (30) extending from the inside of the block (8) to the outside of the block (8) and containing a substance designed to ensure a cycle of evaporation and condensation in natural circulation between the inside and the outside of the block.

2. The device according to Claim 1, **characterized in that** each nuclear-fuel element (9) is associated to an independent heat-exchange tube (30).

3. The device according to Claim 1 or Claim 2, **characterized in that** the block (8) has a compact shape and the nuclear-fuel elements (9) are uniformly distributed in the block (8).

4. The device according to any one of the preceding claims, **characterized in that** the nuclear-fuel elements (9) extend radially from a wall (11) for containment of the block (8) towards the inside of the block.

5. The device according to any one of the preceding claims, **characterized in that** the nuclear-fuel elements (9) are housed in respective seats (12), formed through a wall (11) for containment of the block (8) and uniformly distributed over the solid angle 4n.

6. The device according to any one of the preceding claims, **characterized in that** the nuclear-fuel elements (9) are hollow, and the heat-exchange tubes (30) are housed inside said elements (9) and are arranged so that they pass through a wall (11) for containment of the block (8).

7. The device according to any one of the preceding claims, **characterized in that** the block (8) is made up of at least one pair of sectors (21, 22) which face one another and are mobile with respect to one another, a movement system (25) being provided for varying the distance between said sectors (21, 22) and consequently the effective neutron multiplication factor (Keff) of the core (3).

8. The device according to the preceding claim, **characterized in that** said sectors (21, 22) are arranged along an axis (A) and are mobile with respect to one another along the axis (A).

9. The device according to any one of the preceding claims, **characterized in that** it comprises a system for generation of electric power (45) by thermionic effect, comprising a plurality of shells (46) associated to respective heat-exchange tubes (30), each shell (46) being individually set around a heat-exchange tube (30) and spaced from the heat-exchange tube (30) to which it is associated via electrical insulators (47).

10. The device according to any one of the preceding claims, **characterized in that** it comprises a sail (5) for reflecting the electromagnetic radiation, fixedly connected to the core (3) for reflecting the electromagnetic radiation emitted by the core (3) and generating a propulsive thrust.
